Europäisches Patentamt

European Patent Office

Office européen des brevets

(19)

(11) Numéro de publication : **0 120 731**
**B1**

(12) **FASCICULE DE BREVET EUROPÉEN**

(45) Date de publication du fascicule du brevet :
06.05.87

(51) Int. Cl.⁴ : **H 04 N 7/04**

(21) Numéro de dépôt : **84400310.3**

(22) Date de dépôt : **15.02.84**

(54) Récepteur de télétexte à moyens de décision d'acquisition anticipée.

(30) Priorité : **22.02.83 FR 8302860**

(43) Date de publication de la demande :
**03.10.84 Bulletin 84/40**

(45) Mention de la délivrance du brevet :
**06.05.87 Bulletin 87/19**

(84) Etats contractants désignés :
**AT BE CH DE GB IT LI LU NL SE**

(56) Documents cités :
**US-A- 4 290 062**
**IEEE TRANSACTIONS ON CONSUMER ELECTRO-NICS, vol. CE-26, no. 3, août 1980, pages 600-604, IEEE, New York, US O. LAMBERT et al.: "Antiope and D.R.C.S."**
**IEEE TRANSACTIONS ON CONSUMER ELECTRO-NICS, vol. CE-26, no. 3, août 1980, pages 587-599, IEEE, New York, US G.O. CROWTHER :"Adaption of U.K. teletext system for 525/60 operation"**
**IEEE TRANSACTIONS ON CONSUMER ELECTRO-NICS, vol. CE-26, no. 3, août 1980, pages 527-554, IEEE, New York, US J.P. CHAMBERS: "Enhanced UK teletext moves towards still pictures"**

(73) Titulaire : **L'Etat Français, représenté par le Ministre des P.T.T. (Centre National d'Etudes des Télécommunications)**
**38-40 rue du Général Leclerc**
**F-92131 Issy-Les-Moulineaux (FR)**

**Etablissement Public de Diffusion dit "Télédiffusion de France"**
**21-27 rue Barbès**
**F-92120 Montrouge (FR)**

(72) Inventeur : **Motsch, Roger**
**12, rue des Fontenelles Chavagne**
**F-35310 Mordelles (FR)**
Inventeur : **Sechet, Claude**
**32, rue de Piré**
**F-35000 Rennes (FR)**

(74) Mandataire : **Mongrédien, André et al**
**c/o BREVATOME 25, rue de Ponthieu**
**F-75008 Paris (FR)**

Jouve, 18, rue St-Denis, 75001 Paris, France

## Description

La présente invention a pour objet un récepteur de télétexte muni de moyens permettant une acquisition anticipée de certains articles diffusés.

Pour éviter toute confusion sur la terminologie qui va être employée par la suite, on rappellera tout d'abord que l'expression vidéographie désigne un procédé de télécommunication permettant de présenter à un usager des messages alphanumériques ou graphiques sur un écran de visualisation. Dans une variante de ce procédé, les messages sont systématiquement diffusés par un réseau de télévision et l'usager peut effectuer un choix parmi ces messages. Il s'agit alors de la vidéographie diffusée, dite encore « télétexte ». En France, le système dit « ANTIOPE » relève de cette variante.

Dans un système de télétexte les informations sont codées sous forme numérique et elles sont organisées selon une norme française dite DIDON (pour Diffusion de Données Numériques). Cette norme est décrite dans de nombreux documents, notamment dans les n° 3.80 et 1.82 de la revue « Radiodiffusion-Télévision », dans le brevet français du 6 juin 1975 publié sous le n° 2 313 825, dans le premier certificat d'addition à ce brevet, du 3 juin 1977 publié sous le n° 2 393 480, et également dans le brevet français du 26 septembre 1977 publié sous le n° 2 404 350.

A propos de cette norme, il suffit de rappeler ici que les données numériques sont organisées en octets regroupés en bloc. Un en-tête, formé lui aussi d'octets, est ajouté à chaque bloc et l'ensemble constitue un paquet. Pour l'exploitation en France, en norme dite L, l'ensemble d'un paquet a une taille maximale de 40 octets. Un tel paquet est inséré sur une ligne de l'image, soit uniquement dans la partie de l'image réservée au retour du balayage vertical et partiellement occupée par les signaux de synchronisation de trame et éventuellement d'autres signaux de contrôle, le reste de l'image étant occupé par des signaux vidéo classiques, soit sur la totalité de l'image en l'absence de signal vidéo. A la réception, les paquets sont triés par démultiplexage et, par traitement de l'en-tête, les blocs de données sont restitués.

Dans le système ANTIOPE, des messages distincts peuvent être multiplexés au sein d'une même voie numérique grâce à une structuration en « articles ». La structure des articles permet de multiplexer entre eux, soit des messages de description d'écran, soit d'autres types d'informations.

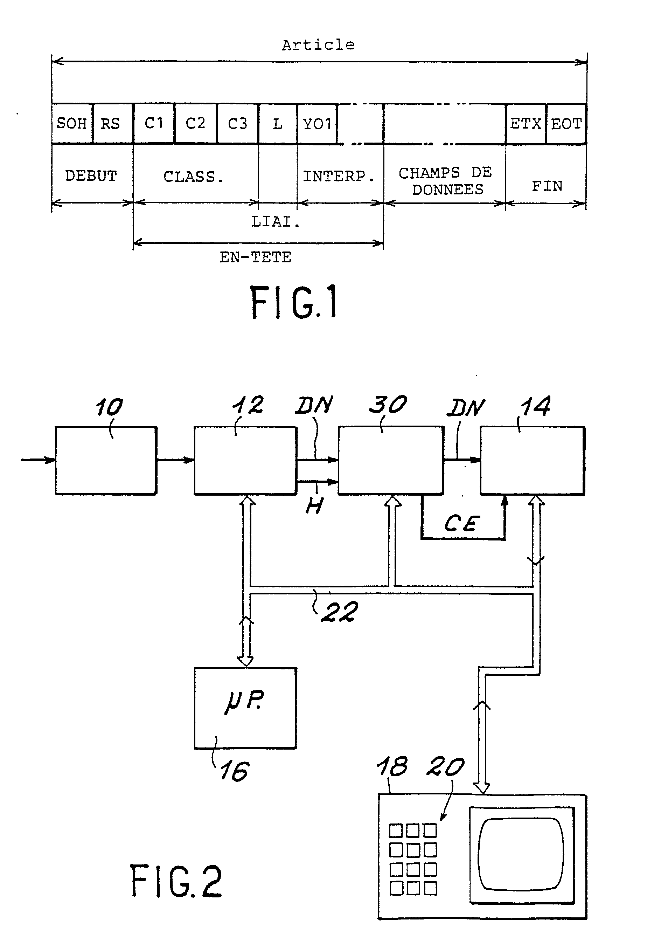

Chaque article est constitué de quatre séquences consécutives : un début d'article, un en-tête d'article, un champ de données et une fin d'article. Une telle structure est représentée sur la figure 1.

Le début et la fin de l'article sont repérés par des codes particuliers. On sait, d'une manière générale, que les codes utilisés en télétexte sont rangés dans un tableau à 16 lignes et 8 colonnes, chaque code étant repéré par le rang de sa colonne (exprimé de 0 à 7) et le rang de sa ligne (exprimé de 0 à 15). Ainsi, pour le début d'article on utilise les deux codes SOH de rangs 0/1 et RS de rangs 1/14. La fin de l'article est codée par ETX-EOT de rangs respectifs 0/3 et 0/4.

L'en-tête d'article est constitué d'une suite d'octets ayant fait l'objet d'un codage de Hamming (soit, par octet : 4 bits d'information + 4 bits de protection). Il comporte trois parties successives, décrites ci-après : une séquence de classification, un octet de liaison et une séquence d'interprétation.

La séquence de classification permet de transmettre un « numéro de classification » repérant le message dans le fichier des messages à transmettre, et participe à la mise en relation source-récepteur. Il s'agit par exemple de la sélection d'une « page » par son « numéro ». Cette séquence comporte trois octets $C_1$, $C_2$, $C_3$ (cités dans l'ordre de leur transmission).

Chaque octet a une valeur qui peut être notée en hexadécimal. Les 16 valeurs possibles sont notées, d'une part de 0 à 9 pour les 10 premières et A, B, C, ... F pour les six dernières.

Les valeurs prises par ces octets définissent une première classification de la nature des messages portés par l'article.

Les différents articles sont répartis en trois classes, suivant leur numéro de classification.

1$^{re}$ classe : $C_1$ = $C_2$ = $C_3$ = 0 : Ce numéro d'article est réservé à la description des « rangées 0 ». La rangée 0 est un « écran auxiliaire », destiné à la visualisation de messages de service. En télétexte, un terminal de réception est censé acquérir et interpréter tous les articles de numéro 0 (l'interprétation d'un article donné correspondant à une demande explicite de l'usager étant cependant prioritaire, c'est-à-dire qu'elle occulte l'acquisition des rangées 0 pendant le traitement).

2$^e$ classe : $C_1$ $C_2$ $C_3$ compris entre 001 et 999 : Ce champ de numérotation est réservé à la transmission d'informations ayant trait à un message visualisable particulier concernant l'écran principal (rangées 1 à 24 et marges). Dans ce cas, $C_1$, $C_2$ et $C_3$ représentent respectivement les centaines, les dizaines et les unités du numéro de page.

3$^e$ classe : au moins l'un des octets $C_1$, $C_2$, $C_3$ est égal à A, les autres étant compris entre 0 et 9 : La valeur A doit être considérée comme équivalente à n'importe quelle valeur prise par l'octet correspondant, entre 0 et 9. Cependant, le numéro 000 ne doit pas être considéré comme inclus dans cette équivalence. Ce mécanisme permet d'adresser un message unique de façon simultanée auprès de plusieurs terminaux branchés sur des « numéros » de pages différents.

**0 120 731**

Toutes ces questions sont décrites en détail dans la Revue « Radiodiffusion télévision » documents 3-80 et 1.82.

Ces différentes caractéristiques d'un système de télétexte ayant été rappelées, on peut aborder maintenant le problème que se propose de résoudre l'invention.

Un magazine destiné à un système de télétexte est diffusé de manière cyclique. Les articles qui composent ce magazine (dont la structure vient d'être précisée) sont diffusés cycliquement eux aussi. A la réception, l'usager sélectionne un article en composant sur un clavier un numéro à trois chiffres, compris entre 001 et 999. D'après ce qui précède, on voit que l'usager n'a accès, en fait, qu'aux articles de la deuxième classe, le nombre affiché sur le clavier coïncidant avec le numéro d'une page du magazine.

Dans les premiers systèmes de télétexte, les informations nécessaires à l'affichage d'une page étaient entièrement contenues dans l'article correspondant. Le choix d'une page parmi toutes les pages diffusées cycliquement s'effectuait par un logiciel approprié qui permettait de comparer les codes C1, C2, C3 des articles reçus avec les trois digits sélectionnés par l'usager à l'aide de son clavier.

Aujourd'hui, cependant, les systèmes sont plus complexes et l'information correspondant à une page à afficher peut ne plus être rassemblée à l'intérieur d'un seul article.

On a vu en effet apparaître différents articles, ou unités, comme par exemple :

— des pages dites de service, qu'il faut acquérir systématiquement ; on y trouve en général des informations relatives au magazine sélectionné (titre, numéro du magazine, ...), indiquant l'origine du magazine (chaîne de diffusion, nom du serveur, ...),

— des unités dites de « téléchargement », qui servent à transmettre des informations communes à plusieurs pages utilisatrices ; ces unités peuvent être des alphabets, des palettes de couleur, des informations de fond de page,

— des unités de messagerie ; ces messages peuvent être des informations qui seront utilisées par le terminal pour commander la mise en marche d'équipements tels que des magnétoscopes ; ils peuvent être aussi des informations de type sommaire des magazines diffusés,

— éventuellement des commandes destinées au terminal (ordre d'affichage d'un sous-titre par exemple),

— des unités d'entrée en session ; ces unités contiennent les informations précisant le lien entre les articles ; par exemple, une unité va contenir la liste des articles diffusés dans le magazine et pour chaque article les numéros de page de téléchargement associée.

Chacun de ces articles reçoit un numéro propre. Un récepteur de télétexte doit donc prendre en compte plusieurs articles pour une seule page demandée.

Les tests à effectuer peuvent exiger ainsi beaucoup de temps, ce qui a pour conséquence, au niveau de la source de diffusion, d'obliger à espacer davantage les articles de telle sorte que le récepteur puisse vérifier les en-têtes de tous les articles du magazine. On est donc amené à utiliser le canal de transmission de façon non optimale.

La présente invention a justement pour objet de remédier à cet inconvénient en dotant les récepteurs de télétexte de moyens permettant de simplifier les tests, notamment d'en raccourcir la durée de traitement, et de minimiser le nombre d'opérations logiques requises.

A cette fin, l'invention prévoit l'utilisation, dans le récepteur, en plus des organes connus permettant d'acquérir une page souhaitée, de moyens permettant d'acquérir par anticipation des articles complémentaires susceptibles de servir pour la restitution d'une page sélectionnée par l'usager.

Ces moyens consistent essentiellement en un circuit, appelé circuit de décision d'acquisition ou, en abrégé, CDA, qui coopère avec les moyens habituels du récepteur, à savoir les moyens informatiques aptes à gérer les organes du récepteur et la mémoire du récepteur qui reçoit les différents articles nécessaires à la restitution de l'image choisie. Ce circuit est essentiellement composé de moyens permettant d'effectuer des tests de comparaison des octets C1, C2, C3 des articles reçus avec des octets A1, A2, A3 désignant la page sélectionnée par l'usager et avec des octets B1, B2, B3 constituant un seuil à partir duquel l'acquisition des articles est décidée.

L'invention permet alors de définir une quatrième classe d'articles, qui fait suite aux trois classes définies plus haut. Cette quatrième classe est la suivante :

4e classe : au moins l'un des octets C1, C2, C3 a une valeur comprise entre B et F : On peut distinguer plusieurs sous-classes :

— si C1 = B : Les valeurs correspondantes sont réservées à des articles qui ne sont sélectionnés que lorsque le décodeur est dans un état approprié (télévision, sous-titrage, recherche d'identification de programme, ...), autre que celui dans lequel l'usager demande, explicitement ou implicitement une page de la première catégorie (0 à 999) ;

— si C1 prend l'une quelconque des valeurs C, D, E, F : les différents codes sont classés de la façon suivante :

· si C1 = F, l'article doit être obligatoirement examiné par un décodeur,

· si C1 ≠ F, les articles qu'il est plus intéressant de prendre reçoivent les valeurs les plus élevées. Ainsi :

EFF désigne un article de plus haute priorité après les « obligatoires »,

EFE désigne un article qui vient juste après, et ainsi de suite jusqu'à C00.

Les caractéristiques de l'invention apparaîtront mieux après la description qui suit, d'un exemple de réalisation donné à titre explicatif et nullement limitatif. Cette description se réfère à des dessins annexés, sur lesquels :

la figure 1 déjà décrite, représente la structure d'un article,

la figure 2 montre la place du circuit de décision d'acquisition dans un récepteur de télétexte conforme à l'invention,

la figure 3 montre la structure de ce circuit.

Le récepteur de télétexte représenté sur la figure 2 comprend d'abord, de manière connue, un circuit 10 de démodulation, dont l'entrée reçoit le signal composite analogique-numérique résultant du multiplexage des données numériques avec le signal vidéo, et dont la sortie délivre les seules données numériques. Le récepteur comprend ensuite un circuit 12 de démultiplexage, qui permet d'extraire les données numériques appartenant à chacune des voies et de restituer la continuité des voies. Ce circuit délivre des données numériques DN organisées en articles comme illustré sur la figure 1, et simultanément un signal d'horloge H qui accompagne ces données. Le récepteur comprend encore une mémoire 14, par exemple fonctionnant selon la procédure FIFO (« First-In-First-Out ») pour laquelle les premières données entrées sont les premières à sortir, un microprocesseur 16, divers organes (récepteur de télévision, mémoire d'image, etc...) rassemblés dans un bloc 18 comprenant notamment un clavier 20. Le microprocesseur 16 est relié aux différents organes par un bus 22.

Le récepteur représenté sur la figure 2 se distingue de l'art antérieur par la présence d'un circuit 30, dit de décision d'acquisition ou CDA, inséré entre le démultiplexeur 12 et la mémoire 14. Ce circuit reçoit les données numériques DN et le signal d'horloge H et il délivre les mêmes données DN à la mémoire avec un signal CE de commande d'ouverture ou de fermeture de la mémoire. De cette manière, le circuit 30 peut commander la mémorisation de certains articles qui lui semblent susceptibles d'être utilisés.

Le principe général de fonctionnement du système est le suivant. Compte tenu de la hiérarchie qui prévaut dans les différents codes des articles diffusés, hiérarchie qui a été précisée plus haut, le récepteur va choisir un seuil pour les codes de classification, seuil à partir duquel les articles seront retenus par le CDA et stockés dans la mémoire. Ce seuil est défini par le microprocesseur et affiché dans le CDA. Il dépend de la capacité de mémorisation du récepteur, qui devra pouvoir stocker tous les articles dont le numéro est supérieur à ce seuil, de la capacité de gestion dynamique de cette mémoire, des conditions d'exploitation des services utilisateurs.

Tout article dont le code de classification est supérieur à la valeur choisie sera retenu. Au bout d'un cycle de diffusion du magazine, le microprocesseur teste le contenu de la mémoire et constate :

soit que cette mémoire n'est pas encore pleine, auquel cas il modifie en baisse la valeur du seuil, soit qu'elle est juste pleine, auquel cas il ne modifie pas le seuil,

soit qu'on n'a pas pu stocker tous les articles qui répondent au critère de sélection, auquel cas il modifie en hausse la valeur du seuil, et il commande un nouveau cycle de sélection.

Si les priorités dans les codes ont été bien établies à l'émission, on disposera ainsi dans la mémoire, non seulement de l'article correspondant à la page choisie, mais des articles complémentaires susceptibles d'être nécessaires au traitement de cette page.

On comprendra mieux le fonctionnement du circuit après la description de sa structure et d'un exemple de mise en œuvre.

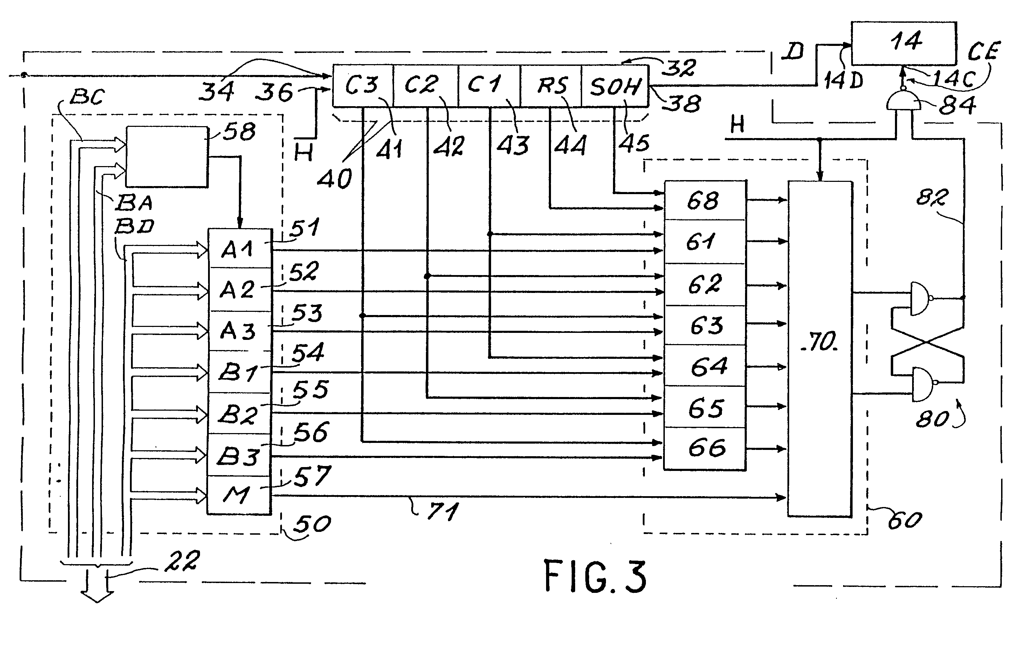

La structure du circuit est représentée sur la figure 3. Ce circuit comprend un registre à décalage 32, à une entrée série 34, une entrée horloge 36, une sortie série 38 et cinq sorties parallèles 40 ; ce registre contient cinq cellules 41 à 45. Il comprend encore un module de mémorisation 50 comprenant un premier groupe de trois cellules de mémorisation 51, 52, 53, un second groupe de trois cellules de mémorisation 54, 55, 56 et une septième unité ou bascule 57 à deux éléments binaires. Chacune des cellules 51 à 56 peut être du type bascule « latch », c'est-à-dire être transparente pendant toute la durée où un signal d'horloge de commande est à 1 et retenir l'état du signal d'entrée à partir du front descendant de l'horloge. On peut utiliser, par exemple, des circuits de type 74LS273. Le module se complète par un circuit de décodage d'adresse 58 alimenté par un bus de commande BC et un bus d'adresse BA. Les cellules de mémorisation sont reliées, elles, à un bus de données BD. Ces trois bus forment le bus général du récepteur. Ce circuit comprend encore un module de décision 60 formé d'un premier circuit logique comprenant un premier groupe de trois circuits comparateurs d'octets 61, 62, 63 à deux entrées, la première reliée à l'une des sorties des cellules 51, 52, 53, la seconde à l'une des trois premières cellules 41, 42, 43 du registre à décalage 32 ; un second groupe de trois circuits comparateurs d'octets 64, 65, 66 à deux entrées, la première reliée à la sortie de l'une des cellules 54, 55, 56, la seconde à l'une des trois premières cellules 41, 42, 43 du registre à décalage, et enfin un détecteur 68 de codes RS et SOH relié aux deux cellules 44 et 45 du registre à décalage. Le circuit 60 comprend encore un circuit 70 qui effectue la synthèse des résultats délivrés par tous les comparateurs 61 à 66 et par le détecteur 68. Le circuit 70 peut être un circuit FPLA (« Field Programmable Logic Array ») qui est un réseau logique programmable par l'utilisateur. Le circuit 70 délivre deux signaux, l'un CO qui est une commande d'ouverture de la mémoire et l'autre CF qui est une commande de fermeture ; les signaux sont mémorisés dans une bascule 80, dont la sortie 82 est reliée à une entrée d'une porte NON-ET 84 dont une autre entrée reçoit les impulsions d'horloge H qui accompagnent les données. La sortie de cette porte est appliquée à l'entrée 14C de

**0 120 731**

commande d'écriture de la mémoire 14, dont l'entrée de données 14D reçoit, par ailleurs, les données extraites du registre à décalage 32.

Le fonctionnement de ce CDA est le suivant. Le registre à décalage 32 reçoit les octets constituant les articles émis. Chaque article commence par SOH et se poursuit par RS, puis par les octets de classification C1, C2, C3 (cf. figure 1). Ces octets se rangent dans le registre, comme indiqué sur la figure 2, l'octet SOH en tête dans la cellule 45, l'octet RS dans la cellule 44, et les octets C1, C2, C3 dans les cellules 43, 42, 41.

Les cellules 51, 52, 53 du module 50 reçoivent les trois octets A1, A2, A3 formant le numéro de page sélectionnée par l'usager, numéro qui est composé sur le clavier 20. Les cellules 54, 55, 56 reçoivent trois octets B1, B2, B3 qui définissent le seuil d'acquisition. Ces deux groupes de trois octets sont fournis par le microprocesseur, via le bus de données BD.

Quant à la bascule 57 à deux éléments binaires, elle peut être mise dans l'un quelconque de quatre états, selon la valeur prise par les deux éléments binaires. Ces quatre états définissent les tests à effectuer, selon la correspondance suivante :

pour 01 : on vérifie uniquement si le numéro de l'article reçu (C1, C2, C3) est égal au numéro demandé (A1, A2, A3) par l'usager,

pour 10 : on vérifie uniquement si le numéro de l'article reçu (C1, C2, C3) est supérieur ou égal au seuil (B1, B2, B3),

pour 11 : on vérifie si le numéro de l'article reçu (C1, C2, C3) est soit égal à (A1, A2, A3), soit supérieur ou égal au seuil (B1, B2, B3),

pour 00 : on procède à une remise à zéro.

La nature du test à effectuer est communiquée au circuit FPLA 70 par une connexion 71.

Le fonctionnement des comparateurs 61 à 66 est clair : recevant deux octets, ils les comparent et indiquent s'il y a identité ou non. Le circuit 68 détecte la présence des codes SOH et RS, ce qui signale l'arrivée d'un article.

L'envoi par le microprocesseur du code 00 dans la bascule 57 réinitialise le système de comparaison avec pour conséquence la fermeture de l'accès à la mémoire 14.

Pour une mise en œuvre effective, il faut donc que les éléments binaires de la bascule 57 définissant la nature du test soient tous deux différents de zéro. Dans ces conditions, les éléments du test A1, A2, A3 et B1, B2, B3 sont chargés dans les mémoires 51 à 53 et 54 à 56 par le microprocesseur. Indépendamment de ce chargement, toutes les informations reçues transitent par le registre à décalage 32.

Les comparateurs 61 à 66 et le détecteur 68 étant en logique combinatoire, ils fonctionnent en permanence. Les octets Ai, Bi, Ci (i = 1 à 3) sont chargés dans 50 et 32 ; lorsque l'horloge H est au niveau bas et lorsque la sortie du détecteur est à 1, ce qui signifie que les codes SOH et RS sont reçus, le test est validé.

Les ordres de fermeture et d'ouverture sont mémorisés dans la bascule 80. Afin d'éviter des ouvertures ou fermetures parasites provenant de retards dans les différents circuits, on utilise l'horloge H d'accompagnement des données pour ne valider les résultats des tests que lorsque les données sont stables.

L'égalité entre A1, A2, A3 et C1, C2, C3 signifie que l'on a obtenu l'article demandé et entraîne donc son transfert dans la mémoire pour ensuite être affiché.

Les tests C1, C2, C3 $\geqslant$ B1, B2, B3 signifient que l'on est en présence d'un article qui peut avoir une utilité pour le récepteur et entraîne donc son transfert dans la mémoire 14 pour une utilisation ultérieure par le microprocesseur, si celui-ci en a besoin, sinon pour y être détruit.

La validation entraîne l'application d'un ordre d'ouverture ou de fermeture de la mémoire. L'ouverture est obtenue lorsque :

le signal « nature du test » inscrit dans 57 étant 01, on a A1 = C1, A2 = C2 et A3 = C3 quels que soient B1, B2, B3,

le signal « nature du test » étant 10, on a C1, C2, C3 $\geqslant$ B1, B2, B3, c'est-à-dire :

— soit C1 > B1,

— soit C1 = B1 et C2 > B2,

— soit C2 = B1, C2 = B2 et C3 $\geqslant$ B3

le signal « nature du test » étant 11, l'une ou l'autre des conditions précédentes est satisfaite.

Toute autre condition, le test étant validé, entraîne la fermeture de l'accès à la mémoire. C'est le cas également lorsque le signal nature du test est 00, indépendamment des conditions de validation du test.

Pour encore mieux saisir le principe de fonctionnement du circuit de l'invention, un exemple va être décrit.

On suppose que l'on est en présence d'un magazine comprenant :

10 articles numérotés de 1 à 10, directement accessibles au clavier ; ces articles contiennent l'information des numéros des pages de téléchargement à acquérir avant visualisation ;

3 articles numérotés EFD, EFE et EFF (notation hexadécimale) qui sont des articles de téléchargement qui sont utilisés en complément des 10 articles précédents selon le tableau suivant, qui donne pour chaque article accessible (numéroté de 1 à 10) les articles complémentaires à acquérir.

(Voir Tableau page 6)

5

|  | EFF | EFE | EFD |
|---|---|---|---|
| 1 | X | X | |
| 2 | | X | X |
| 3 | X | | |
| 4 | X | X | |
| 5 | | X | |
| 6 | X | | |
| 7 | X | | X |
| 8 | X | X | |
| 9 | X | | |
| 10 | X | | |

On remarquera que la source a affecté la priorité la plus élevée (c'est-à-dire EFF qui est supérieur aux deux autres codes), à l'article utilisé le plus fréquemment en complément des articles accessibles au clavier par leur numéro. Dans l'exemple pris, ces articles de téléchargement sont des alphabets complémentaires ;

l'article numéroté F00 qui est un article d'entrée en session et qui contient les relations existant entre les articles visualisables et les articles de téléchargement.

On se place en outre dans le cas où le récepteur dispose d'une faible mémoire lui permettant de ne stocker que deux articles de téléchargement.

On suppose tout d'abord que le récepteur n'est pas capable d'utiliser l'article F00 d'entrée en session.

Lorsque l'usager demande au clavier une page numérotée de 1 à 10, le circuit d'acquisition CDA sera programmé en mode 01 pour rechercher l'article correspondant. Une fois que cet article sélectionné par le CDA a été traité à sa sortie de la mémoire, le récepteur va vérifier si dans sa mémoire il dispose des pages complémentaires associées :

dans l'affirmative, il va pouvoir afficher la page,

dans la négative, il va programmer le CDA en mode 10 avec un seuil égal à C00 (notation hexadécimale). Dans ce mode, il va voir défiler dans sa mémoire toutes les pages de téléchargement et il va pouvoir stocker dans sa mémoire les seuls articles de téléchargement dont il a besoin, par exemple EFE et EFD si la page sélectionnée est 2 ; puis il affichera la page. Cette opération nécessite un cycle de diffusion supplémentaire.

Lorsque la page est affichée, le récepteur reprogramme le CDA en mode 10 avec un seuil égal à EFE de façon à stocker dans sa mémoire les deux articles de téléchargement (EFF et EFE) les plus fréquemment utilisés.

Le récepteur pourra ainsi afficher, en au plus un cycle de diffusion du magazine, toutes les pages sauf celles numérotées 2 et 7 qui ont besoin de la page EFD. Pour ces dernières, il faudra deux cycles de diffusion : il faut en effet abaisser le seuil à C00.

Pour un récepteur capable d'utiliser la page d'entrée en session FOO, dès l'initialisation le CDA est programmé en mode 10 avec un seuil égal à F00. Dans ce cas, tous les articles de la forme FXX transitent par la mémoire. Le récepteur prend donc en compte en particulier l'article F00.

On peut reprendre l'exemple de la sélection de la page 2 par l'usager. Le récepteur sait déjà, du fait de la prise en compte de l'article F00 que la page 2 a besoin des pages complémentaires EFE et EFD. Le sachant, dès la sélection, il va programmer le CDA en mode 11 avec A1 A2 A3 = 002 et B1 B2 B3 = EFD. De cette façon, tous les éléments de la page ont pu être sélectionnés en un seul cycle au lieu de deux comme précédemment.

Si le récepteur n'avait pas été équipé du circuit CDA de l'invention, le fonctionnement aurait été le suivant :

recherche de la page demandée au clavier,

recherche des pages de téléchargement associées par leurs numéros ; sur chaque en-tête d'article, il faut donc tester si le numéro prend une valeur parmi plusieurs ; lorsque ce test est fait en logiciel, il est très long à effectuer ; or, ceci est très gênant car à la suite d'un article très court, on risque en effet de ne pas prendre en compte l'en-tête de l'article suivant.

Le récepteur peut utiliser le contenu de l'article d'entrée en session et mémoriser les deux articles de téléchargement les plus fréquemment utilisés, et rechercher l'article demandé au clavier ainsi que les articles de téléchargement associés non présents dans sa mémoire.

Si l'on compare maintenant les contraintes d'émission des articles dans les deux cas, on observe :

sans CDA (art antérieur) :

le temps entre la fin d'un en-tête d'article et le début de l'en-tête de l'article suivant dans le cycle de diffusion doit être tel que le récepteur soit capable de sélectionner un numéro d'article parmi plusieurs ; actuellement ce temps est de 640 µs (soit 10 lignes de balayage),

avec CDA (selon l'invention) :

6

la contrainte n'existe plus qu'entre deux articles de téléchargement consécutifs ; l'intervalle de temps entre deux tels articles peut être utilisé par des articles visualisables.

**Revendication**

Récepteur de télétexte comprenant de manière connue :

un circuit de démodulation (10) ayant une entrée recevant un signal composite résultant d'un multiplexage entre des données numériques avec un signal vidéo et une sortie délivrant les seules données numériques,

un circuit de démultiplexage de données (12) ayant une entrée reliée à la sortie du circuit de démodulation et une sortie délivrant des données numériques selon des voies continues, ces données étant organisées en articles, chaque article comprenant un début d'article constitué de deux codes particuliers (SOH, RS) suivi d'un en-tête d'article comprenant, entre autres, trois octets de classification (C1, C2, C3),

une mémoire (14) ayant une entrée de données numérique et une entrée de commande,

un microprocesseur (16),

divers organes (18) dont un clavier (20) de numérotation permettant de choisir un code à trois octets (A1, A2, A3), ce code étant compris entre 001 et 999, ce récepteur étant caractérisé en ce qu'il comprend en outre un circuit de décision d'acquisition anticipée d'articles (30) inséré entre le circuit de démultiplexage (12) et la mémoire (14), ce circuit comprenant :

un registre à décalage (32) à une entrée série (34) reliée au circuit de démultiplexage (12), une sortie série (38) reliée à l'entrée de données de la mémoire (14), ce registre comprenant cinq cellules (41 à 45) reliées à cinq sorties parallèles (40),

un module de mémorisation (50) comprenant un premier groupe de trois cellules de mémorisation (51, 52, 53) aptes à mémoriser trois octets (A1, A2, A3), un second groupe de trois cellules de mémorisation (54, 55, 56) aptes à mémoriser trois octets (B1, B2, B3), et une bascule (57) à deux éléments binaires, cette bascule pouvant ainsi se trouver dans l'un quelconque de quatre états logiques,

un circuit logique de comparaison comprenant un premier groupe de trois comparateurs d'octets (61, 62, 63) à deux entrées, l'une reliée à l'une des trois cellules de mémorisation (51, 52, 53) et l'autre à l'une des sorties parallèles des trois premières cellules (41, 42, 43) du registre à décalage (32), un second groupe de trois comparateurs d'octets (64, 65, 66) à deux entrées, l'une reliée à la sortie de l'une des trois cellules de mémorisation (54, 55, 56), l'autre à l'une des sorties parallèles des trois premières cellules (41, 42, 43) du registre à décalage (32), et enfin un détecteur (68) de codes de début d'article (SOH, RS), ce détecteur étant relié aux sorties parallèles des deux dernières cellules (44, 45) du registre à décalage (32),

un circuit logique (70) de synthèse des comparaisons, relié aux six comparateurs d'octets (61 à 66) et au détecteur (68) et à la bascule (57), ce circuit délivrant un signal de commande d'ouverture (CO) ou de fermeture (CF) appliqué à l'entrée de commande de la mémoire, selon le résultat de l'un quelconque des trois tests, un test étant défini par l'un de trois états possibles de la bascule (57), ces tests étant respectivement :

— C1 C2 C3 = A1 A2 A3,

— C1 C2 C3 ⩾ B1 B2 B3,

— C1 C2 C3 = A1 A2 A3 ou C1 C2 C3 ⩾ B1 B2 B3

le quatrième état de la bascule (57) définissant une remise à zéro des cellules de mémorisation, le microprocesseur (16) chargeant de manière appropriée le module de mémorisation avec des octets A1, A2, A3 définissant une page à sélectionner, et des octets B1, B2, B3 définissant un seuil tel que tous les articles dont les octets C1, C2, C3 de classification sont supérieurs à ce seuil provoquent l'apparition du signal d'ouverture de la mémoire, le microprocesseur vérifiant après chaque cycle de diffusion des données l'état de la mémoire (14) pour agir en hausse ou en baisse sur le seuil B1, B2, B3, ou le laisser inchangé.

**Claim**

Teletext receiver comprising in a known way :

a demodulation circuit (10) having an input receiving a composite signal resulting from a multiplexing between digital data and a video signal and an output delivering only the digital data,

a data demultiplexing circuit (12) having an input connected to the output of the demodulation circuit and an output delivering digital data in continuous channels, these data being organized into articles, each article including a start of article formed from two particular codes (SOH, RS) followed by an article header including, among other things, three classification bytes (C1, C2, C3),

a memory (14) having a digital data input and a control input,

a microprocessor (16),

various units (18) of which a numbering keyboard (20) enables the selection of a three-byte code (A1, A2, A3), this code being in the range 001 to 999,
this receiver being characterized in that it also includes an anticipated acquisition of articles decision circuit (30) placed between the demultiplexing circuit (12) and the memory (14), this circuit including :
a shift register (32) having a serial input (34) connected to the demultiplexing circuit (12), a serial output (38) connected to the data input of the memory (14), this register including five cells (41 to 45) connected to five parallel outputs (40),
a storage module (50) including a first group of three storage cells (51, 52, 53) capable of storing three bytes (A1, A2, A3), a second group of three storage cells (54, 55, 56) capable of storing three bytes (B1, B2, B3) and a flip-flop (57) having two binary elements, this flip-flop thus being able to be in any one of four logic states,
a logic comparison circuit including a first group of three two-input byte comparators (61, 62, 63), one input being connected to one of the three storage cells (51, 52, 53) and the other being connected to one of the parallel outputs of the first three cells (41, 42, 43) of the shift register (32), a second group of three two-input byte comparators (64, 65, 66), one input being connected to the output of one of the three storage cells (54, 55, 56), the other being connected to one of the parallel outputs of the first three cells (41, 42, 43) of the shift register (32), and finally a start of article codes (SOH, RS) detector (68), this detector being connected to the parallel outputs of the last two cells (44, 45) of the shift register (32),
a logic circuit (70) for the combination of the comparisons, connected to the six byte comparators (61 to 66) and to the detector (68) and to the flip-flop (57), this circuit delivering an opening control signal (CO) or a closing control signal (CF) applied to the control input of the memory,
according to the result of any one of the three tests, a test being defined by one of three possible states of the flip-flop (57), these tests being :
— C1 C2 C3 = A1 A2 A3,
— C1 C2 C3 $\geqslant$ B1 B2 B3 and
— C1 C2 C3 = A1 A2 A3 or C1 C2 C3 $\geqslant$ B1 B2 B3 respectively,
the fourth state of the flip-flop (57) defining a reset to zero of the storage cells,
the microprocessor (16) appropriately loading the storage module with the bytes A1, A2, and A3 defining a page to be selected, and with bytes B1, B2 and B3 defining a threshold such that all the articles whose classification bytes C1, C2 and C3 are greater than this threshold cause the appearance of the memory-opening signal, the microprocessor, after each data transmission cycle, checking the state of the memory (14) in order to raise or lower the threshold B1, B2, B3, or to leave it unchanged.

**Patentanspruch**

Teletextempfänger, enthaltend in bekannter Art :
eine Demodulatorschaltung (10) mit einem Eingang, die ein zusammengesetztes Signal empfängt, das aus einer Multiplexierung von Digitaldaten mit einem Videosignal resultiert, und einem Ausgang, der die einzigen Digitaldaten liefert ;
eine Datendemultiplexerschaltung (12) mit einem Eingang, der mit dem Ausgang der Demodulatorschaltung verbunden ist, und einem Ausgang, der die Digitaldaten auf Gleichstromkanälen abgibt, wobei diese Daten in Artikel geordnet sind, wobei jeder Artikel einen Artikelanfang enthält, der von zwei speziellen Kodes (SOH, RS) gebildet ist, die von einem Artikelkopf gefolgt werden, der u.a. drei Klassifikationsoktetts (C1, C2, C3) enthält,
einen Speicher (14) mit einem Eingang für Digitaldaten und einem Steuereingang,
einen Mikroprozessor (16),
verschiedene Organe (18), von denen eine numerische Tastatur (20) die Auswahl eines Kodes mit drei Oktetts (A1, A2, A3) gestattet, wobei der Kode zwischen 001 und 999 liegt,
wobei dieser Empfänger dadurch gekennzeichnet ist, daß er weiterhin eine Entscheidungsschaltung (30) für den vorbekannten Zugriff auf Artikel enthält, die zwischen die Demultiplexerschaltung (12) und den Speicher (14) eingefügt ist, wobei diese Schaltung enthält :
ein Schieberegister (32) mit einem Serieneingang, der mit der Demultiplexerschaltung (12) verbunden ist, einem Serienausgang (38), der mit dem Dateneingang des Speichers (14) verbunden ist, wobei das Register fünf Zellen (41-45) enthält, die mit fünf parallelen Ausgängen (40) verbunden sind,
ein Speichermodul (50), enthaltend eine erste Gruppe aus drei Speicherzellen (51, 52, 53), die zur Speicherung von drei Oktetts (A1, A2, A3) eingerichtet sind, eine zweite Gruppe aus drei Speicherzellen (54, 55, 56), die dazu eingerichtet sind, drei Oktetts (B1, B2, B3) zu speichern, und eine Kippschaltung (57) mit zwei Binärelementen, wobei diese Kippschaltung sich in einem beliebigen von vier logischen Zuständen befinden kann,
eine logische Vergleichsschaltung, enthaltend eine erste Gruppe aus drei Oktett-Komparatoren (61, 62, 63) mit zwei Eingängen, von denen der eine mit einer der drei Speicherzellen (51, 52, 53) und der andere mit einem der parallelen Ausgänge der drei ersten Zellen (41, 42, 43) des Schieberegisters (32) verbunden ist, eine zweite Gruppe aus drei Oktett-Komparatoren (64, 65, 66) mit zwei Eingängen, von denen der eine mit dem Ausgang einer der drei Speicherzellen (54, 55, 56) und der andere mit dem einen der parallelen Ausgänge der drei ersten Zellen (41, 42, 43) des Schieberegisters (32) verbunden ist, und schließlich einen Detektor (68) für die Kodes des Artikelanfangs (SOH, RS), wobei dieser Detektor mit den parallelen Ausgängen der zwei letzten Zellen (44, 45) des Schieberegisters (32) verbunden ist,

eine Logikschaltung (70) zur Synthese der Vergleiche, die mit den sechs Oktett-Komparatoren (61-66) und dem Detektor (68) und der Kippschaltung (57) verbunden ist, wobei diese Schaltung ein Steuersignal zur Öffnung (CO) oder zur Schließung (CF) liefert, das dem Steuereingang des Speichers zugeführt wird, entsprechend dem Ergebnis von einem beliebigen der drei Tests, wobei ein Test definiert ist durch den einen von drei möglichen Zuständen der Kippschaltung (57), wobei die Tests jeweils sind :

— C1 C2 C3 = A1 A2 A3,

— C1 C2 C3 $\geqslant$ B1 B2 B3,

— C1 C2 C3 = A1 A2 A3 oder C1 C2 C3 $\geqslant$ B1 B2 B3,

wobei der vierte Zustand der Kippschaltung (57) eine Rücksetzung der Speicherzellen auf Null definiert, der Mikroprozessor (16) in geeigneter Weise das Speichermodul verändert, wobei die Oktetts A1, A2, A3 eine auszuwählende Seite definieren und die Oktetts B1, B2, B3 eine Schwelle so definieren, daß alle Artikel, deren Klassifikationsoktetts C1, C2, C3 oberhalb dieser Schwelle liegen, das Erscheinen eines Öffnungssssignals für den Speicher hervorrufen, wobei der Mikroprozessor nach jedem Datenausbreitungszyklus den Zustand des Speichers (14) prüft, um eine Erhöhung oder Erniedrigung des Schwellenwerts B1, B2, B3 hervorzurufen oder ihn unverändert zu lassen.

| | | | | | | | | | | | |
|---|---|---|---|---|---|---|---|---|---|---|---|
| SOH | RS | C1 | C2 | C3 | L | YO1 | | | | ETX | EOT |
| DEBUT | | CLASS. | | | | INTERP. | | CHAMPS DE DONNEES | | FIN | |

Article

LIAI.

EN-TETE

## FIG.1

## FIG.2

FIG.3

0 120 731